# EUROPEAN PATENT APPLICATION

(11) **EP 1 959 596 A2**
(43) Date of publication of application: **20.08.2008**
(21) Application number: 08002259.3
(22) Date of filing: 07.02.2008
(51) Int. Cl.: H04H 60/72

(54) **Digital broadcast playback method for mobile terminal**

(30) Priority: 16.02.2007 KR 20070016603
(71) Applicant: Samsung Electronics Co., Ltd., Suwon-si, Gyeonggi-Do (KR)
(72) Inventor: Song, Ho Kwon, Gyeonggi-do (KR); Seo, Jeong-Wook, Gyeonggi-do (KR); Lee, Chung-Kyu, Seoul (KR)
(74) Representative: Lang, Johannes

(57) **Abstract**

A digital broadcast playback method for a mobile terminal is disclosed. The digital broadcast playback method includes updating, upon transitioning to a broadcast reception mode, electronic service guide (ESG) data, displaying a service channel list using the ESG data, selecting a service channel in the service channel list, downloading at least one auxiliary data element from an auxiliary data page associated with the selected service channel and playing back a broadcast program of the selected service channel together with at least one of the downloaded auxiliary data elements,

## Description

### BACKGROUND OF THE INVENTION

### Field of the Invention

The present invention relates to a digital broadcasting and, more particularly, to a mobile terminal capable of digital broadcast reception.

### Description of the Related Art

In digital broadcasting, a broadcasting station broadcasts a broadcast signal carrying digitally coded and modulated data. A digital broadcast receiver receives the broadcast signal, and reproduces the received signal through demodulation and decoding. The digital broadcast receiver includes a tuner, broadcast data demodulator, and broadcast data decoder. Digital multimedia broadcasting (DMB) and digital video broadcasting (DVB) are representative examples of current digital broadcasting. Digital broadcasting provides a plurality of service channels through a frequency channel. The service channels are used to transmit broadcast programs and information on the channels and programs.

Recently, advanced mobile terminals, such as mobile phones, notebook computers and personal digital assistants, tend to provide digital broadcast receiving capabilities through special-purpose multimedia processors or multimedia-enhanced digital broadcast receiving modules. Such a mobile terminal may further include a wireless communication unit for radio frequency (RF) communication.

A digital broadcast receiver or mobile terminal capable of digital broadcast reception receives various broadcast-related information together with audio and video data, and processes the broadcast-related information using corresponding decoders. This broadcast-related information may be an electronic program guide (EPG) of DMB or an electronic service guide (ESG) of DVB-H (DVB-handheld). The ESG provides a guide to scheduled broadcast programs and available services.

In current digital broadcasting, broadcast content is provided in various languages. Hence, it would be desirable to provide users with captions and/or audios in various languages in addition to audios and videos native to the broadcast content.

### SUMMARY OF THE INVENTION

The present invention provides a digital broadcast playback method for a mobile terminal, wherein information on captions and audios in various languages is provided to the user so that the user can download a caption or audio in a desired language and playback a digital broadcast together with the downloaded caption or audio.

In accordance with an exemplary embodiment of the present invention, there is provided a digital broadcast playback method for a mobile terminal, including updating, upon transitioning to a broadcast reception mode, electronic service guide (ESG) data, displaying a service channel list using the ESG data, selecting a service channel in the service channel list, downloading at least one auxiliary data element from an auxiliary data page associated with the selected service channel and playing back a broadcast program of the selected service channel together with at least one of the downloaded auxiliary data elements.

In accordance with another exemplary embodiment of the present invention, there is provided a digital broadcast playback method for a mobile terminal, including updating, in response to a broadcast reception request, electronic service guide (ESG) data, playing back a broadcast program of a selected service channel using the updated ESG data, checking whether information regarding auxiliary data associated with the broadcast program is present in the ESG data, displaying, if information regarding auxiliary data is present in the ESG data, the information on auxiliary data; downloading at least one auxiliary data element from an auxiliary data page associated with the selected service channel and playing back the broadcast program of the selected service channel together with at least one of the downloaded auxiliary data elements.

### BRIEF DESCRIPTION OF THE DRAWINGS

The objects, features and advantages of the present invention will be more apparent from the following detailed description in conjunction with the accompanying drawings, in which:
FIG. 1 is a block diagram illustrating a mobile terminal in accordance with the principles of the present invention;
FIG. 2 is a block diagram illustrating a broadcast receiving unit of the mobile terminal of FIG. 1;
FIG. 3 is a block diagram illustrating a protocol handling unit of the mobile terminal of FIG. 1;
FIGS. 4A to 4F illustrate protocol data structures for IP-based services in the DVB-H system;
FIGS. 5A to 5C illustrate processing of time sliced burst data in a selected service channel;
FIGS. 6A and 6B are sequence diagrams illustrating a download procedure for auxiliary data;
FIGS. 7A and 7B are flowcharts illustrating a digital broadcast playback method according to another exemplary embodiment of the present invention;
FIGS. 8A and 8D are screen representations illustrating steps in the method of FIGS. 7A and 7B; and
FIG. 9 is a flow chart illustrating a digital broadcast playback method according to another exemplary embodiment of the present invention.

### DETAILED DESCRIPTION

Exemplary embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

For the purpose of description, a mobile communication terminal is described as an example of a mobile terminal of the present invention. However, the present invention is not limited to a mobile communication terminal. The mobile terminal of the present invention is a terminal that can receive and reproduce digital broadcasts, and may be any information and communication appliance or multimedia appliance, such as a mobile communication terminal, digital broadcast receiving terminal, personal digital assistant, smart phone, international mobile telecommunications 2000 (IMT 2000) terminal, wideband code division multiple access (WCDMA) terminal, or universal mobile telecommunications system (UMTS) terminal. The descriptions presented herein are focused on the DVB-H system, but it would be recognized that such description is not limited to the DVB-H system and is applicable to other digital broadcast systems.

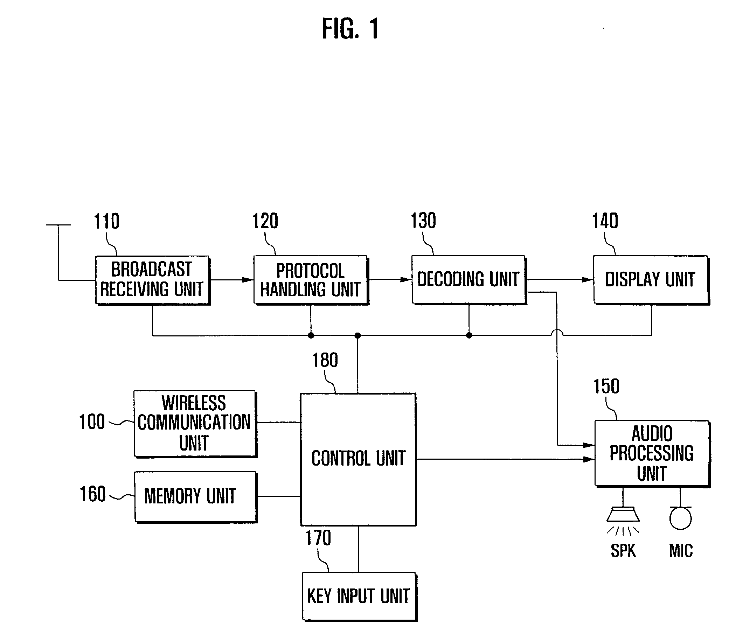

FIG. 1 is a block diagram illustrating a mobile terminal in accordance with the principles of the present invention. The mobile terminal has a digital broadcast receiving capability.

Referring to FIG. 1, the mobile terminal includes a wireless communication unit 100, broadcast receiving unit 110, protocol handling unit 120, decoding unit 130, display unit 140, audio processing unit 150, memory unit 160, key input unit 170, and control unit 180.

The wireless communication unit 100 performs wireless data transmission and reception operations. The wireless communication unit 100 may include a radio frequency (RF) transmitter for amplifying and upconverting the frequency of a signal to be transmitted, and an RF receiver for low-noise amplifying a received signal and downconverting the frequency of the received signal. In particular, the wireless communication unit 100 sends and receives scripts and data according to the wireless application protocol (WAP).

The control unit 180 controls the overall operation of the mobile terminal and signal exchange between internal elements thereof. That is, the control unit 180 controls signal exchange between the wireless communication unit 100, broadcast receiving unit 110, protocol handling unit 120, decoding unit 130, display unit 140, audio processing unit 150, and memory unit 160.

The key input unit 170 sends a key signal generated by the user to the control unit 180. The key input unit 170 includes various keys including number keys.

The memory unit 160 includes a program storage section for storing programs to control operations of the mobile terminal, and a data storage section for storing data generated from execution of the programs. In particular, the data storage section stores electronic service guide (ESG) data.

The broadcast receiving unit 110 receives data on a service channel of a physical channel selected by the user, under the control of the control unit 180.

The protocol handling unit 120 separates service channel data from the broadcast receiving unit 110 into audio data, video data, and broadcast information data with reference to protocols in use. The broadcast information data may be ESG data.

The decoding unit 130 decodes audio data and video data from the protocol handling unit 120. The decoding unit 130 includes an audio decoder for decoding coded audio data, and a video decoder for decoding coded video data. Decoded video data is output through the display unit 140, and decoded audio data is output through a speaker SPK of the audio processing unit 150.

Next, functions of the mobile terminal related to digital broadcast reception are described.

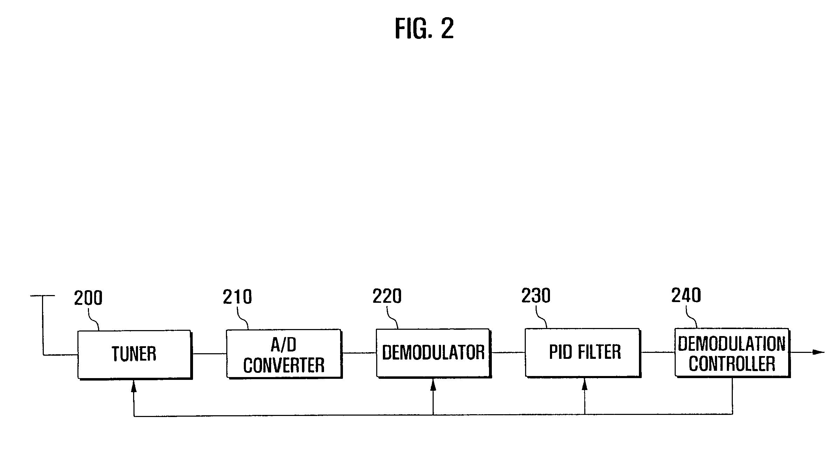

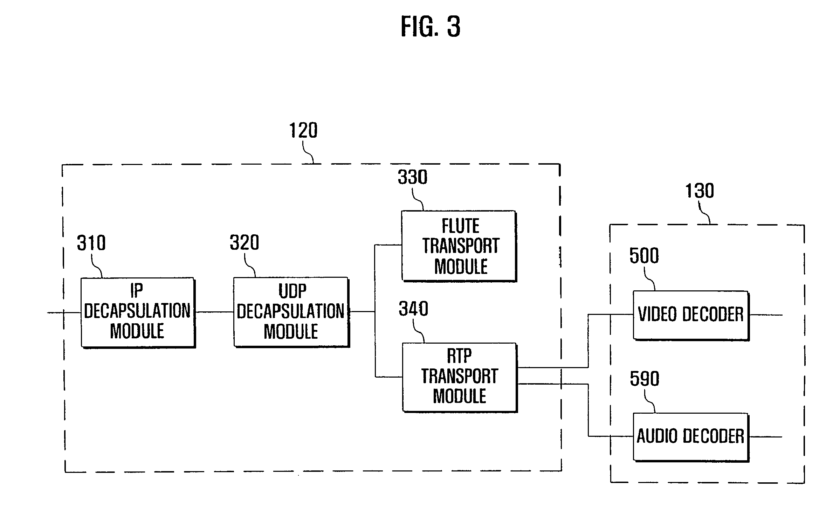

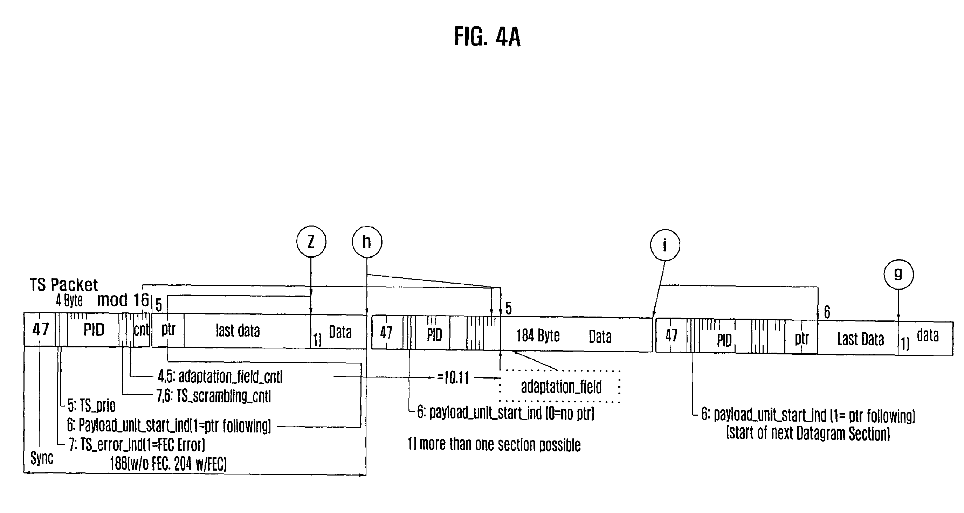

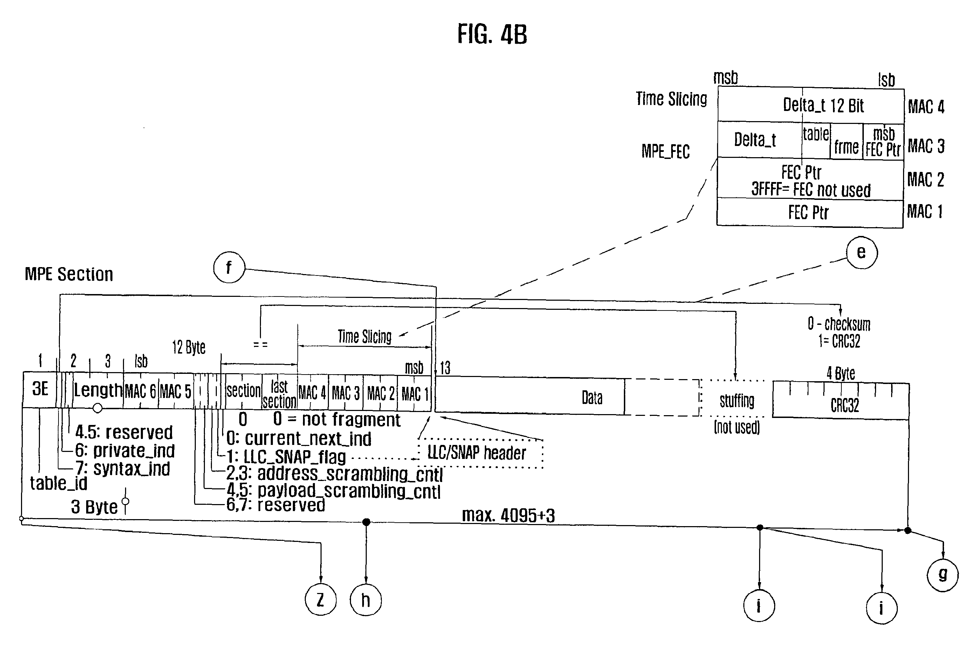

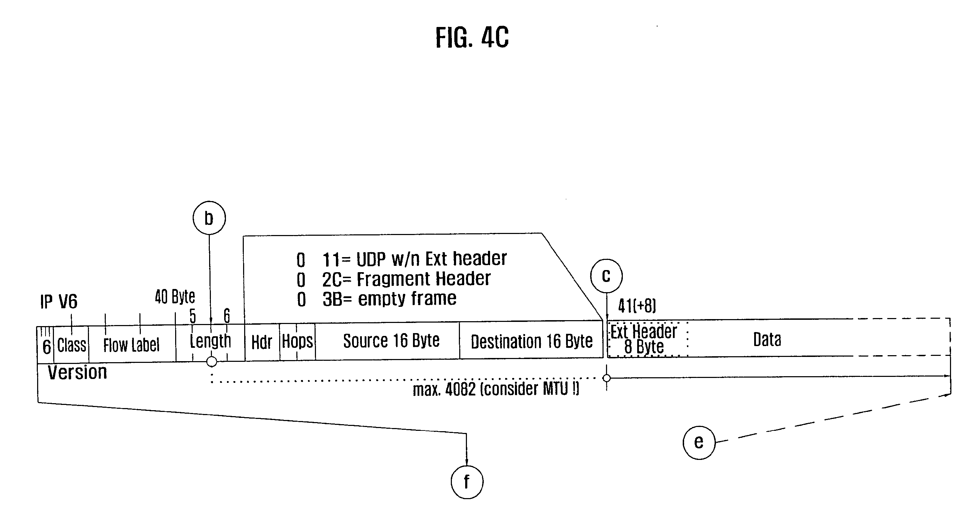

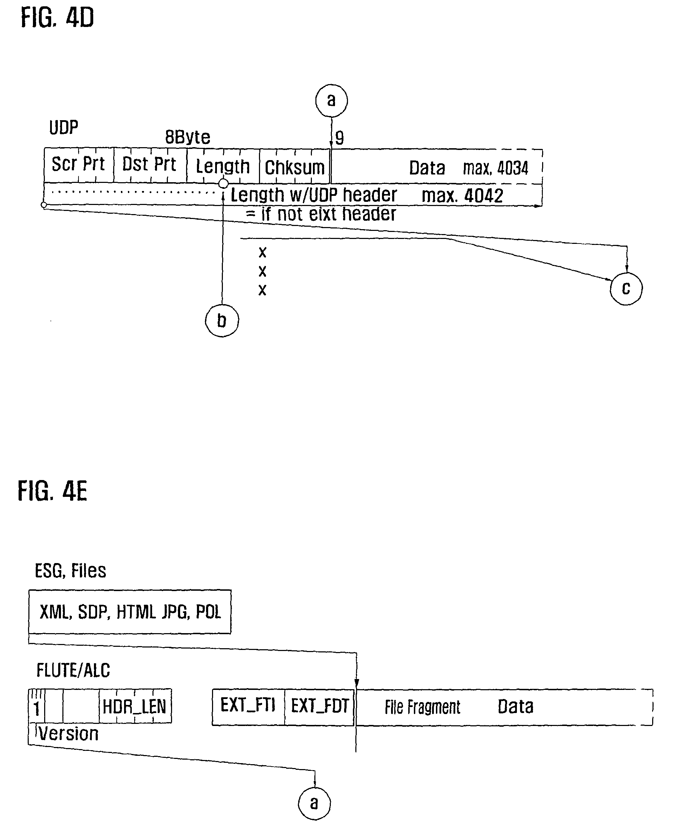

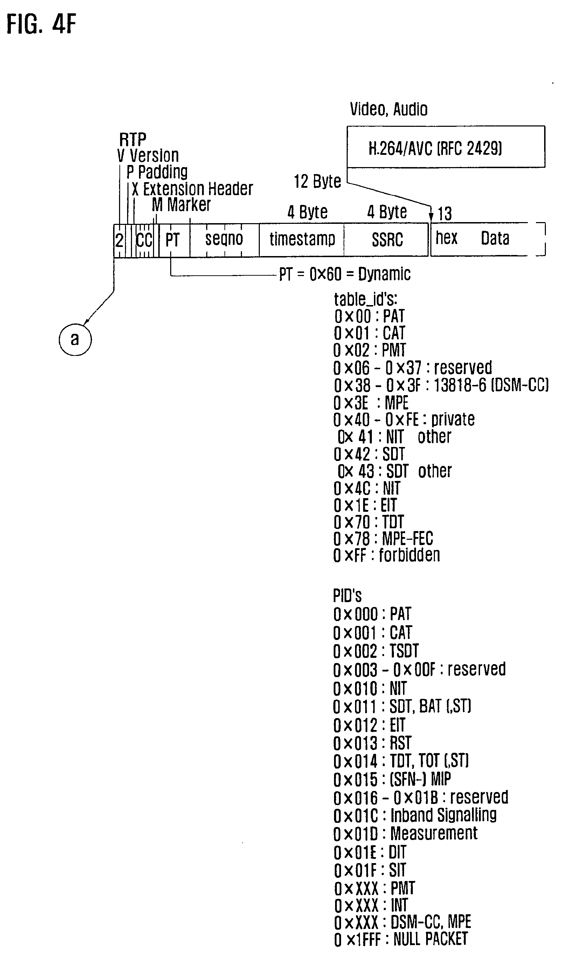

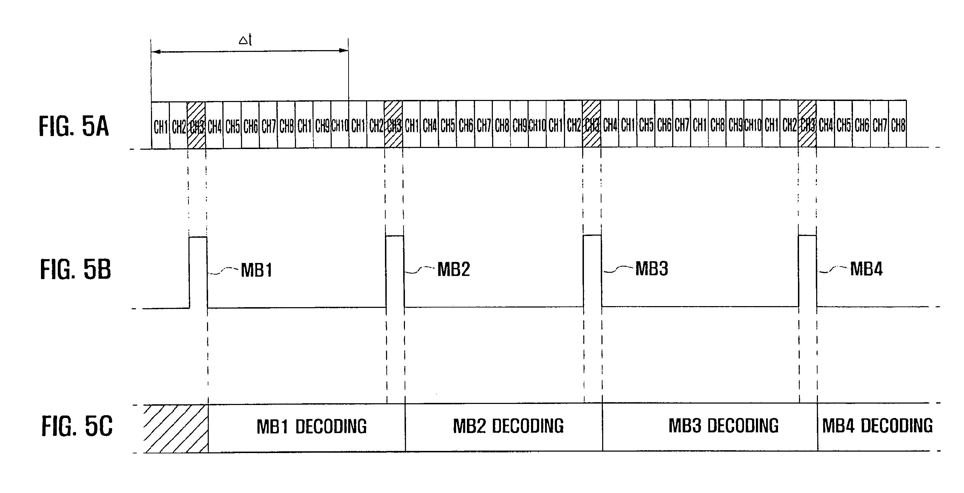

FIG. 2 is a block diagram illustrating the broadcast receiving unit 110 of the mobile terminal. FIG. 3 is a block diagram illustrating the protocol handling unit 120. FIGS. 4A to 4F illustrate protocol data structures for IP-based services in the DVB-H system. FIGS. 5A to 5C illustrate processing of time sliced burst data in selected service channels.
In the DVB-H system, DVB-H data is transmitted as packets in MPEG-2 transport streams (TS). As illustrated in FIG. 4A, an MPEG-2 TS packet includes a header portion and payload portion. The header portion contains information for synchronization and packet identification (PID). The PID information can be used to identify a service channel and associated payload. FIG. 4B illustrates the format of a multiprotocol encapsulation (MPE) section, which can be inserted in payload portions of corresponding TS packets. An MPE section includes table identification information (table_ID), error-correction information (MPE-FEC) for correcting errors in received data, and information on time slicing of data. FIG. 4C illustrates the format of an Internet protocol (IP) datagram using IPv6. An IP datagram includes the IP version in use (IPv6 or IPv4), a source IP address, and a destination IP address. The destination IP address can be used to send a digital broadcast to a particular user through IP-datacasting instead of broadcasting. FIG. 4D illustrates the format of a user datagram protocol (UDP) datagram. A UDP datagram includes a source port number (Scr Prt) and a destination port number (Dst Prt). FIG. 4E illustrates the format of a FLUTE or ALC packet (FLUTE for file delivery over unidirectional transport and ALC for asynchronous layered coding protocol). The FLUTE or ALC protocol can be used to transmit ESG data or a file. FIG. 4F illustrates the format of an RTP packet (RTP for real-time transport protocol). The RTP protocol is used to transmit audio data and video data.

FIGS. 5A to 5C illustrate time slicing and decoding of video data. As described before, a physical channel of the DVB-H system can accommodate a plurality of service channels. A preset time duration is allocated to each service channel in a single period Δt. A Δt period is referred to as a burst time, and the Δt period and "burst time" are used interchangeably, herein. Pieces of data of time-ordered service channels are multiplexed together for transmission.

In FIG. 5A, it is assumed that a physical channel accommodates 10 service channels CH1 to CH10 and the service channel CH3 is selected by the user. Then, the service channel CH3 is burst-on, and the remaining service channels are burst-off. The power to the broadcast receiving unit 110 can be controlled so that the broadcast receiving unit 110 operates only during the burst-on time of the selected service channel CH3, as illustrated in FIG. 5B. Received data on the selected service channel CH3 is decoded in the Δt period, as illustrated in FIG. 5B. The mobile terminal decodes data of a service channel in the Δt period, and displays the decoded data through the display unit 140. Application of power and decoding of data according to burst-on times are referred to as time slicing.

Referring to FIG. 2, the broadcast receiving unit 110 includes a tuner 200 and a demodulation section. The demodulation section includes an analog-to-digital (A/D) converter 210, demodulator 220, PID filter 230, and demodulation controller 240.

In response to selection of a service channel by the user, the tuner 200 tunes to a physical channel accommodating the selected service channel, and receives signals on service channels of the tuned physical channel. The tuner 200 includes a phase locked loop for synthesizing a desired physical channel frequency, a mixer for mixing a received broadcast signal of a tuned physical channel and the synthesized physical channel frequency together to produce an output broadcast signal, and a bandpass filter for passing frequency components of the output broadcast signal corresponding to the physical channel frequency.

The demodulation controller 240 controls the tuner 200 to tune to a physical channel frequency according to a channel control signal from the control unit 180, and controls the PID filter 230 to set the PID corresponding to a selected service channel.

The control unit 180 obtains information on the PID, IP address, and port number associated with a service channel selected by the user on the basis of program specific information (PSI)/service information (SI) from the broadcast receiving unit 110 and a service description table (SDT) of the ESG from the protocol handling unit 120. That is, the control unit 180 can identify PIDs associated with a physical channel and related service channels on the basis of a PID set by the PID filter 230 and PSI/SI tables including a network information table (NIT), SDT, and event information table (EIT).

Referring to FIG. 4E, the control unit 180 can identify PID, IP, and port information corresponding to service channels, and to audio and video data of the service channels through analysis of the SDT in the ESG from the protocol handling unit 120. That is, the control unit 180 identifies PID, IP, and port information corresponding to service channels, and to audio and video data of the service channels through analysis of the PSI/SI and/or the SDT.

When the user selects a service channel, the control unit 180 outputs channel control data to the demodulation controller 240 for PID filtering with respect to a physical channel and related service channels. That is, the channel control data contains the PID of the selected service channel. Then, the demodulation controller 240 controls the tuner 200 to set a physical channel frequency associated with the selected service channel, and controls the PID filter 230 to set the PID of the selected service channel. The tuner 200 receives a broadcast signal having a frequency equal to the set physical channel frequency.

The A/D converter 210 converts the broadcast signal from the tuner 200 into a digital signal, and the demodulator 220 demodulates the digital signal to recover the original broadcast data. The demodulator 220 may operate in accordance with orthogonal frequency division multiplexing (OFDM) or coded OFDM (COFDM). The broadcast data recovered by the demodulator 220 is in the form of MPEG2-TS packets as illustrated in FIG. 4A, and TS packets include PID information identifying service channels. The PID filter 230 extracts those TS packets having a PID equal to the PID of the selected service channel, and sends those TS packets having PSI/SI information to the control unit 180.

TS packets extracted by the PID filter 230 can include information regarding MPE-FEC (multiprotocol encapsulation - forward error correction) and time slicing, as illustrated in FIG. 4B.

If a TS packet contains time slicing information, the demodulation controller 240 controls a packet reception operation to receive TS packets within a time sliced burst. That is, the demodulation controller 240 controls application of power to the tuner 200 and demodulator 220 according to the time sliced burst. The time slicing information includes burst-on times of selected and buffered service channels. The demodulation controller 240 applies power to the tuner 200 and demodulator 220 during the burst-on time, and discontinues application of power during the time duration except for the burst-on time. The demodulation controller 240 can apply additional error correction to the data of selected and buffered service channels if MPE-FEC information is present.

As described above, the demodulation controller 240 controls the tuner 200 to set a physical channel frequency associated with a selected service channel according to channel control data from the control unit 180, and controls the PID filter 230 to set the PID of the selected service channel. The demodulation controller 240 also controls time slicing to reduce power consumption according to MPE-section information illustrated in FIG. 4B, and applies additional error correction to received data if MPE-FEC information is present, increasing the data rate. The demodulation controller 240 can output data in the form of IP datagrams illustrated in FIG. 4C.

The tuner 200 selects a broadcast signal having a frequency equal to a set physical channel frequency. The demodulator 220 converts the broadcast signal from the tuner 200 into a digital signal, and demodulates the digital signal to recover the original broadcast data in accordance with OFDM or COFDM. The broadcast data recovered by the demodulator 220 is in the form of MPEG2-TS packets as illustrated in FIG. 4A, and TS packets include PID information identifying service channels. The PID filter 230 extracts those TS packets having a PID equal to the PID of the selected service channel through PID filtering, and sends those TS packets having PSI/SI information to the demodulation controller 240. The demodulation controller 240 controls time slicing and corrects errors in the service channel data on the basis of MPE-section data.

FIG. 3 is a block diagram illustrating the protocol handling unit 120.

Referring to FIG. 3, the protocol handling unit 120 processes data received on a selected service channel according to protocols in use, and separates the processed data into audio data and video data. A video decoder 500 of the decoding unit 130 decodes the video data from the protocol handling unit 120, and outputs the decoded video data to the display unit 140 (not shown). An audio decoder 590 of the decoding unit 130 decodes the audio data from the protocol handling unit 120, and outputs the decoded audio data to a speaker SPK through the audio processing unit 150 (not shown).

The protocol handling unit 120 includes an IP decapsulation module 310, UDP decapsulation module 320, FLUTE transport module 330, and RTP transport module 340.

The IP decapsulation module 310 accepts an IP datagram as illustrated in FIG. 4C. The IP datagram contains a piece of data received on a selected service channel, and includes IP information such as source and destination IP addresses. The IP decapsulation module 310 extracts the IP information from the IP datagram to decapsulate the IP datagram into a UDP datagram.

The UDP decapsulation module 320 accepts a UDP datagram from the IP decapsulation module 310. The UDP datagram includes UDP information such as source and destination port addresses, as illustrated in FIG. 4D. The UDP decapsulation module 320 extracts the UDP information from the UDP datagram to decapsulate the UDP datagram. If the extracted UDP information is related to the FLUTE or ALC protocol, the decapsulated UDP datagram is sent to the FLUTE transport module 330. That is, file type data such as ESG, XML, SDP, HTML, JPG or POL data is sent to the FLUTE transport module 330. If the extracted UDP information is related to the RTP protocol, the decapsulated UDP datagram is sent to the RTP transport module 340. That is, audio data and video data are sent to the RTP transport module 340. The RTP transport module 340 demultiplexes a UDP datagram into audio data and video data, and outputs the video data and audio data to the video decoder 500 and audio decoder 590, respectively.

The control unit 180 controls protocol processing of the protocol handling unit 120. The control unit 180 can include an ESG engine (an XML engine and ESG decoder), session description protocol (SDP) parser, and PSI/SI decoder. The control unit 180 can further include a protocol controller and protocol manager for protocol processing and management. The control unit 180 processes protocol information and protocol data from the protocol handling unit 120. The control unit 180 collects overall PSI/SI according to the MPEG-2 and DVB-H standards using tables such as the NIT, SDT and EIT extracted by the broadcast receiving unit 110, and parses ESG data from the protocol handling unit 120 to control the overall operation of the mobile terminal.

A service channel, and ESG, audio and video data of the service channel are identified by PID, IP and port information. The PSI/SI and SDP provides tables describing identification information regarding service channels, and audios, videos and ESG of the service channels. Thus, the control unit 180 can identify any of service channels, audio data, video data, and ESG data through decoding of the PSI/SI and SDT. The control unit 180 may include the protocol handling unit 120.

In addition, the control unit 180 controls a processing path in the broadcast receiving unit 110 and protocol handling unit 120. In most cases, MPEG-TS packets and datagrams illustrated in FIGS. 4A to 4F are mainly used to deliver audio data and video data. That is, data received in a burst time is mainly composed of audio data and video data. The control unit 180 activates internal elements and controls formation of a processing path between the internal elements according to analysis results of data received on a service channel. That is, when MPEG-TS packets are received in a burst time, the control unit 180 controls the demodulation controller 240 to decapsulate the received TS packets into MPE sections, and MPE-FEC sections if necessary. The demodulation controller 240 controls demodulation on the basis of parameters present in the section headers for time slicing and additional error correction. The control unit 180 controls the IP decapsulation module 310 to decapsulate the MPE sections into IP datagrams. The control unit 180 controls the UDP decapsulation module 320 to decapsulate the IP datagrams into UDP datagrams in consideration of the IP version. The UDP decapsulation module 320 sends the UDP datagrams to the FLUTE transport module 330 or the RTP transport module 340, depending upon port information in the UDP datagram headers. The control unit 180 controls the FLUTE transport module 330 to decapsulate the UDP datagrams into FLUTE packets, which are sent to a corresponding application for ESG or file processing. Alternatively, the control unit 180 controls the RTP transport module 340 to decapsulate the UDP datagrams into RTP packets. The RTP packets are divided into audio data and video data. The video data is sent to the video decoder 500, and the audio data is sent to the audio decoder 590. As described above, the control unit 180 controls internal components of the protocol handling unit 120 according to the data processing path.

The components 240, 310, 320, 330 and 340 can be implemented in software. In this case, the control unit 180 can activate software components as tasks corresponding to the data processing path.

When the protocol handling unit 120 outputs video data and audio data through demultiplexing, the video decoder 500 decodes the video data to display the decoded video data through the display unit 140, and the audio decoder 590 decodes the audio data to reproduce the decoded audio data through the speaker. The video decoder 500 can be an H264 or MPEG decoder, and the audio decoder 590 can be an advanced audio coding (AAC) decoder.

In the mobile terminal capable of DVB-H digital broadcast reception, the protocol handling unit 120 separates received broadcast data into audio data, video data, and broadcast information data and sends them to corresponding decoders. ESG data is sent through the FLUTE transport module 330 of the protocol handling unit 120 to the control unit 180, which then compresses the ESG data and stores the compressed ESG data in the memory unit 160. Next, downloading of auxiliary data for digital broadcasts is described.

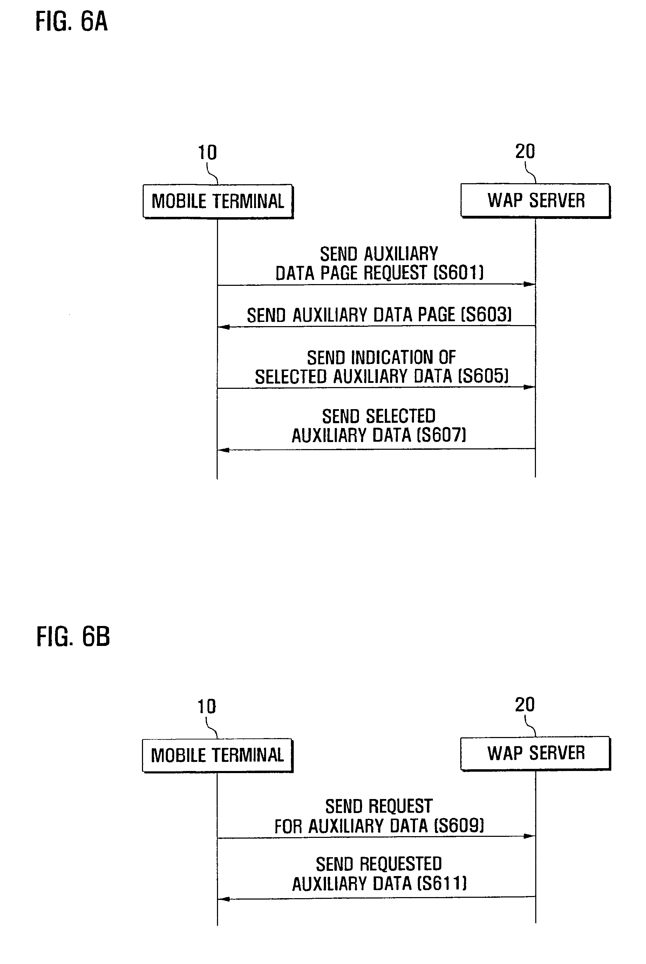

FIGS. 6A and 6B are sequence diagrams illustrating a download procedure for auxiliary data.

In an embodiment of the present invention, auxiliary data can be downloaded using the WAP protocol and provided to the user. That is, a mobile terminal can extract a link to a page having auxiliary data (auxiliary data page) from ESG data. Auxiliary data pages can be coded in XML, and saved in a WAP server. Auxiliary data of an auxiliary data page can be downloaded to the mobile terminal.

Referring to FIG. 6A, a mobile terminal 10 sends an auxiliary data page request to a WAP server 20 using link information on auxiliary data pages (S601). As a response to the auxiliary data page request, the WAP server 20 sends a requested auxiliary data page to the mobile terminal 10 (S603). The mobile terminal 10 displays the received auxiliary data page on the display unit 140, and the user can select one or more auxiliary data elements in the page. Upon auxiliary data selection, the mobile terminal 10 sends a request script for the selected auxiliary data to the WAP server 20 (S605). In response to the request script, the WAP server 20 sends the selected auxiliary data to the mobile terminal 10 (S607).

As described above, in FIG. 6A, an auxiliary data page is presented to the user for selection. In FIG. 6B, auxiliary data is downloaded without presenting an auxiliary data page to the user.

Referring to FIG. 6B, the mobile terminal 10 can obtain link information on an auxiliary data page and on auxiliary data from ESG data.

The mobile terminal 10 sends a request script for desired auxiliary data to the WAP server 20 (S609). The request script can contain link information on the desired auxiliary data page and auxiliary data. In response to the request script, the WAP server 20 sends the requested auxiliary data to the mobile terminal 10 (S611).

Thereafter, the mobile terminal 10 plays back received digital broadcasts with application of downloaded auxiliary data.

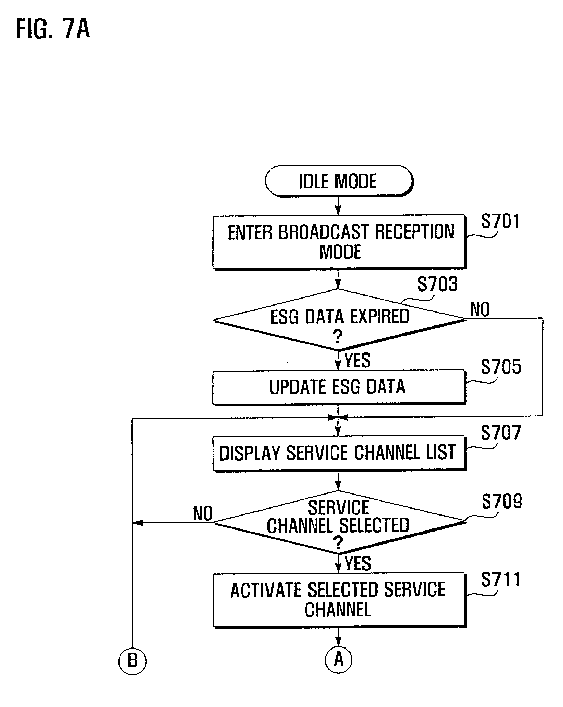

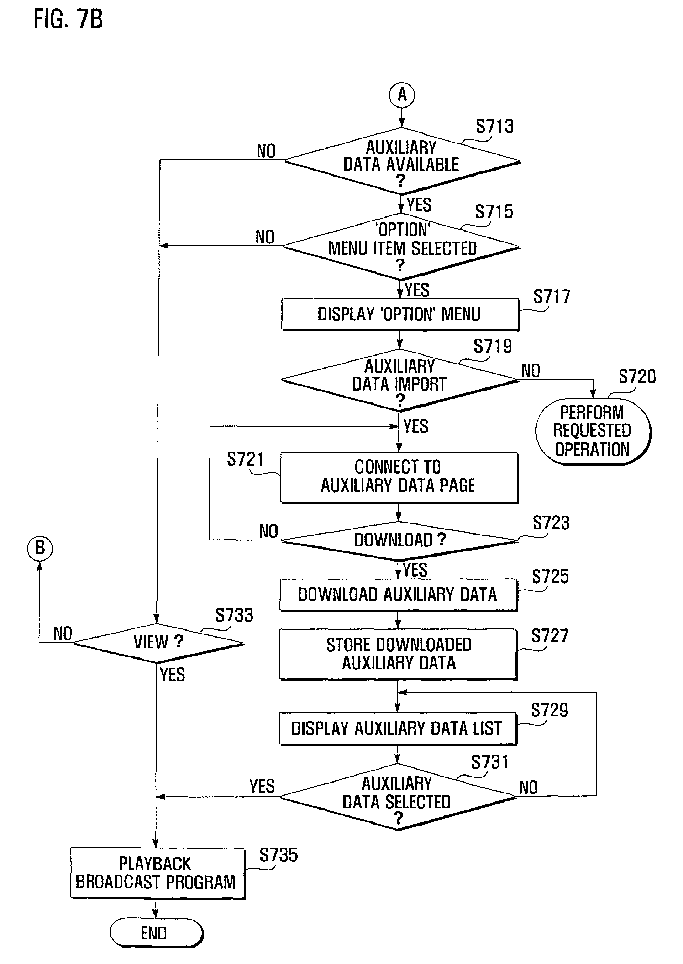

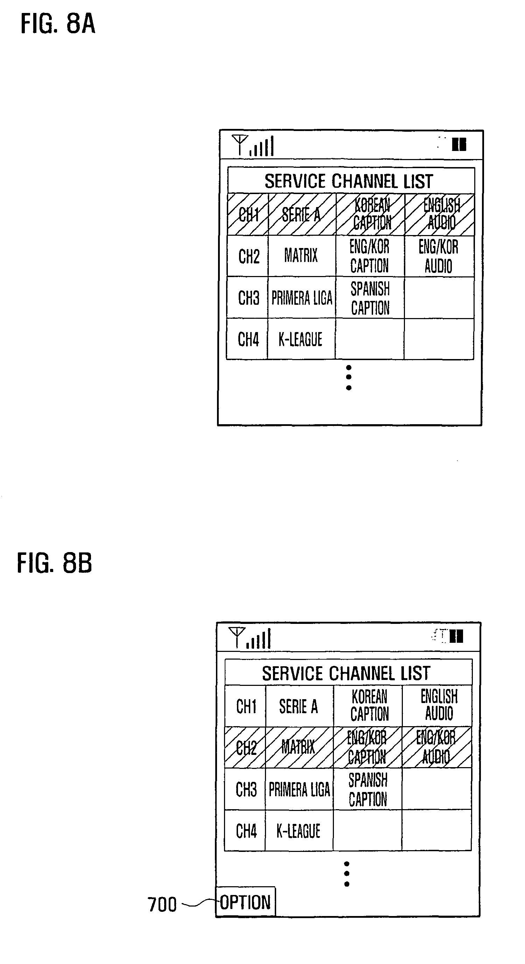

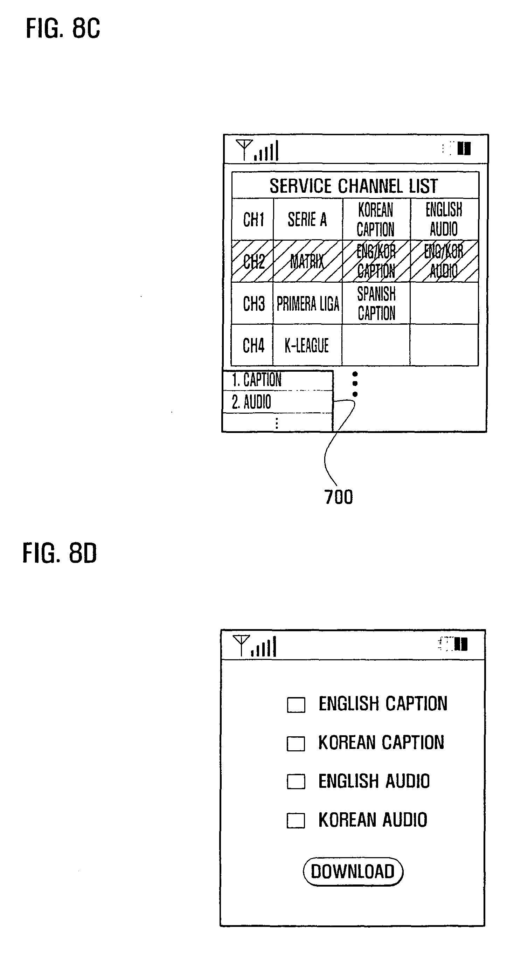

FIGS. 7A and 7B are flowcharts illustrating a digital broadcast playback method according to another exemplary embodiment of the present invention. FIGS. 8A and 8D are screen representations illustrating steps in the digital broadcast playback method.

Referring to FIGS. 7A and 7B, in response to a broadcast reception request from the user during an idle mode, the control unit 180 of the mobile terminal enters a broadcast reception mode (S701). The broadcast reception request can be issued using a business key ('TV key') of a digital broadcast provider, or through menu selection.

In the broadcast reception mode, the control unit 180 checks whether existing ESG data has expired (S703). If the existing ESG data has expired, the control unit 180 updates the ESG data by receiving new ESG data (S705). Digital broadcast providers can update ESG data at regular intervals or at particular times. Preferably, the mobile terminal checks the expiration of ESG data whenever it enters the broadcast reception mode.

In the present embodiment, the ESG data includes information on broadcast programs of service channels and on auxiliary data for the broadcast programs. The auxiliary data includes caption data and audio data for a broadcast program. The caption data is an auxiliary data element to provide a caption for a related broadcast program. The audio data is an auxiliary data element to provide a related broadcast program with audio in a language different from that in the default audio native to the broadcast program.
Table 1 shows a segment of ESG data coded in XML for describing auxiliary data.

**[Table 1]**

| |
|---|
| <RelatedMaterial> |
| <HowRelated href="Caption"/> |
| <MediaLocator> |
| <mpeg7:MediaUri>http://caption.tim.it//Matrix_200612021230 |
| </mpeg7:MediaUri> |
| </MediaLocator> |
| <PromotionalText> Caption </PromotionalText> |
| <PromotionalMedia/> |
| </RelatedMaterial> |

Referring to Table 1, the ESG data segment includes information regarding a caption and link (i.e., a URL) to the caption of a selected service channel. For example, an identifier "Caption" indicates that a broadcast program "Matrix" has an associated caption, and a URL ''http://caption.tim.it/!Matrix_200612021230'' is a link to an auxiliary data page having the caption.

Table 2 illustrates another segment of ESG data coded in XML.

**[Table 2]**

| |
|---|
| <RelatedMaterial> |
| <HowRelated href="Audio"/> |
| <MediaLocator> |
| <mpeg7:MediaUn>http://Audio.tim.it//Matnx_200612021230 |
| </mpeg7:MediaUri> |
| </MediaLocator> |
| <PromotionalText> Audio </PromotionalText> |
| <PromotionalMedia/> |
| </RelatedMaterial> |

Referring to Table 2, the ESG data segment includes information regarding an audio and link (URL) to the audio of a selected service channel. For example, an identifier "Audio" indicates that a broadcast program "Matrix" has an associated audio other than the default audio, and a URL "ttp://Audio.tim.it//Matrix_200612021230" is a link to an auxiliary data page having the audio.

Table 3 illustrates another segment of ESG data coded in XML.

**[Table 3]**

| |
|---|
| <RelatedMaterial> |
| <HowRelated href="Auxiliary data"/> |
| <MediaLocator> |
| <mpeg7:MediaUri>http://Auxiliary.tim.it//Matrix_200612021230 |
| </mpeg7:MediaUri> |
| </MediaLocator> |
| <PromotionalText> Auxiliary data </PromotionalText> |
| <PromotionalMedia/> |
| </RelatedMaterial> |

Referring to Table 3, the ESG data segment includes information regarding a caption and audio, and a link (URL) to the caption and audio of a selected service channel. For example, an identifier "auxiliary data" indicates that a broadcast program "Matrix" has an associated caption and audio, and a URL "http://Auxiliary.tim.it//Matrix_200712021230" is a link to an auxiliary data page having the caption and audio.

In the present invention, distinct links can be assigned to a caption and audio of a broadcast program for separate downloading, as described in connection with Table 1 and Table 2. Alternatively, a single link can be assigned to a caption and audio of a broadcast program, as described in connection with Table 3. In the following description, a single link is used to connect to an auxiliary data page having a caption and audio. Multiple links may also be used to connect to multiple auxiliary data pages.

Referring back to FIG. 7A, the control unit 180 displays a list of available service channels on the display unit 140 (S707). The service channel list includes information regarding captions and supported languages, as illustrated in Table 4.

**[Table 4]**

| | Service channel | Program | Caption | Audio |
|---|---|---|---|---|
| 1 | CH1 | Serie A | Korean | English |
| 2 | CH2 | Matrix | English/Korean | English/Korean |
| 3 | CH3 | Primera Liga | Spanish | Unavailable |
| 4 | CH4 | K-LEAGUE | Unavailable | Unavailable |

Referring to Table 4, the service channel list includes information regarding available service channels, titles of broadcast programs, captions, and audios. The contents of the service channel list are obtained by processing ESG data described in connection with Tables 1 to 3.

The service channel list of Table 4 can be displayed as in FIG. 8A. In FIG. 8A, the service channel CH1 is in an activated state. Information on captions and audios can be displayed using icons. Display of a service channel list enables the user to check what captions and audios are supported for particular service channels.

During display of the service channel list, the user can select a desired service channel in the service channel list through a key input. When the user selects a service channel using direction keys (S709, Figure 7A), the control unit 180 activates the selected service channel (S711). It is assumed that the service channel CH2 is selected and activated as in FIG. 8B.

The control unit 180 checks whether the newly activated service channel has related auxiliary data (S713, Figure 7B). If the newly activated service channel does not have related auxiliary data, the control unit 180 proceeds to step S733. If the newly activated service channel has related auxiliary data, the control unit 180 checks whether an 'OPTION' menu item 700 (Figure 8B) is selected by the user (S715, Figure 7B). If the 'OPTION' menu item 700 is not selected, the control unit 180 proceeds to step S733. If the 'OPTION' menu item 700 is selected, the control unit 180 expands the selected menu item into an 'OPTION' menu 700, as illustrated in FIG. 8C using processing described in step S717, Figure 7B.

At step S733, when the user issues a viewing request, the control unit 180 plays back a broadcast program of the selected service channel (S735).

The user can connect to an auxiliary data page associated with the selected service channel by selecting a menu item "auxiliary data import" in the 'OPTION' menu 700. The menu item "auxiliary data import" may be not displayed in the 'OPTION' menu 700 if the selected service channel does not support a caption and audio or does not have link information thereof.

When the user selects the menu item "auxiliary data import" in the 'OPTION' menu 700 (S719, Figure 7B), the control unit 180 connects to the auxiliary data page associated with the selected service channel using link information (S721). That is, the auxiliary data page is displayed on the display unit 140. Preferably, the auxiliary data page is displayed via a WAP browser using the WAP protocol. The auxiliary data page may have a list of available auxiliary data elements, as illustrated in FIG. 8D. The user can select one or more auxiliary data elements using check boxes. In FIG. 8D, English and Korean captions and English and Korean audios are supported as auxiliary data elements. It is assumed that the Korean and English captions and the English audio are selected by the user. When the user selects the 'download' button (S723, Figure 7B), the control unit 180 downloads the selected auxiliary data (S725).

After downloading, the control unit 180 stores the downloaded auxiliary data (S727), and displays a list of stored auxiliary data elements for selection by the user (S729).

When the user selects one or more auxiliary data elements in the list (S731), the control unit 180 plays back the broadcast program of the activated service channel (i.e. CH2) with application of the selected auxiliary data elements (S735).

An auxiliary data element that is stored but not selected for use can be applied later when the associated broadcast program is recorded and played back. In the case when only one auxiliary data element is downloaded at steps S723 and S725, the broadcast program of the activated service channel can be played back immediately.

Here, playback of a broadcast program with application of auxiliary data is described. Table 5 illustrates a caption file downloaded as an auxiliary data element. The caption file contains timing information for synchronizing the caption with moving images of a broadcast program.

**[Table 5]**

| |
|---|
| <SYNC Start=107789><P Class=ENCC> |
| Oh, my God! |
| <SYNC Start=108813><P Class=ENCC>&nbsp |
| <SYNC Start=131480><P Class=ENCC> |
| I'm in. |
| <SYNC Start=132970><P Class=ENCC>&nbsp |
| <SYNC Start=246094><P Class=ENCC> |
| We're almost there. |
| <SYNC Start=247891><P Class=ENCC>&nbsp |
| <SYNC Start=248063><P Class=ENCC> |
| -Sir, are you sure about this?<br> |
| -I told you, we're going to be all right. |
| <SYNC Start=252022><P Class=ENCC>&nbsp |

The timing information in the caption file indicates a point in time at which caption data is displayed. For example, caption data "<SYNC Start=107789><P Class=ENCC> Oh, my God!" indicates that a caption segment "Oh, my God!" is displayed at an absolute time value of "107789". The point in time at which caption data is displayed can be represented by an absolute time value (in units of seconds) in consideration of the running time of corresponding broadcast data.

Both audio data downloaded from an auxiliary data page and video data of a broadcast program contain timestamps as timing information. Hence, data of an English audio file can be played back in synchronization with video data of a corresponding broadcast program according to timestamps.
In FIGs. 7A/B, a caption or audio is set as auxiliary data before playback of a corresponding broadcast program. Next, a caption or audio is set as auxiliary data during playback of a corresponding broadcast program.

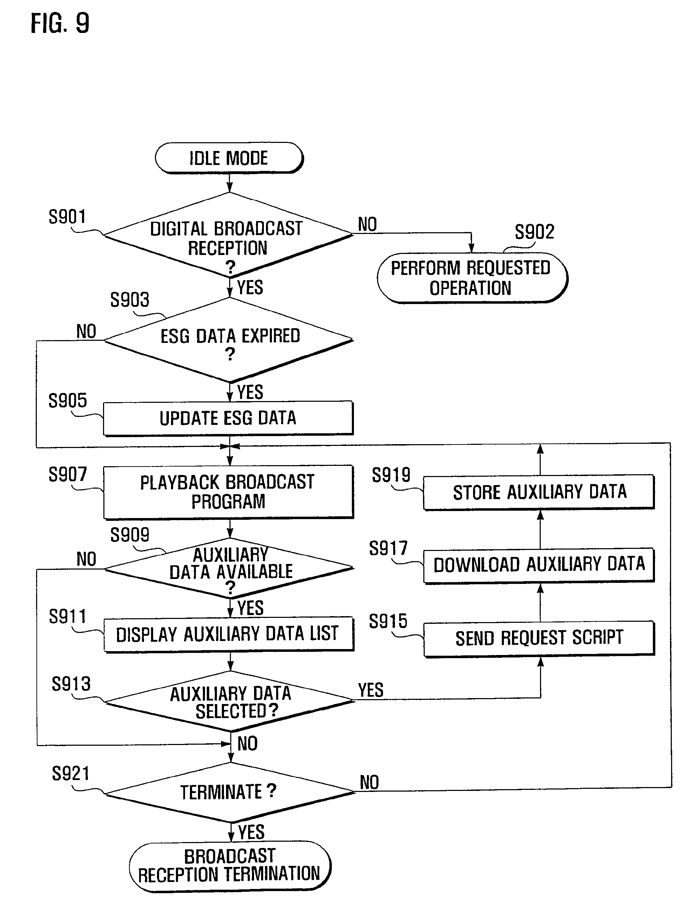

FIG. 9 is a flow chart illustrating a digital broadcast playback method according to another exemplary embodiment of the present invention.

Referring to FIG. 9, the control unit 180 of the mobile terminal in an idle mode checks whether a broadcast reception request is input from the user (S901).

If a request other than the broadcast reception request is input, the control unit 180 performs the requested operation (S902). If a broadcast reception request is input, the control unit 180 enters a broadcast reception mode, and checks whether existing ESG data has expired (S903).

At step S901, the user can initiate digital broadcast reception by issuing a sequence of requests to transition to a broadcast reception mode, select a service channel, and play back a broadcast program of the selected service channel, as described in connection with FIGS. 7A and 7B. Alternatively, the user can use preset shortcut keys. For example, in response to a long key press of the 'TV key', the control unit 180 plays back broadcast data of a previously used service channel. In response to sequential input of a '*' key, numeric key and TV key, the control unit 180 plays back broadcast data of a service channel corresponding to the numeric key. Or, the control unit 180 plays back broadcast data of a preset service channel at a particular time.

If the existing ESG data has expired, the control unit 180 updates the ESG data (S905). If the existing ESG data is still valid, the control unit 180 proceeds to step S907 for playback of a digital broadcast.

The control unit 180 plays back a broadcast program of a selected service channel (S907), and checks the availability of auxiliary data associated with the broadcast program (S909). If auxiliary data is available, the control unit 180 displays an auxiliary data list associated with the broadcast program (S911). If auxiliary data is unavailable, the control unit 180 proceeds to step S921.

Auxiliary data elements in the list can be displayed as icons having key mappings. For example, an English caption, Korean caption, English audio and Korean audio can be mapped to numeric keys '1', '2', '3' and '4', respectively, and displayed as icons. These key mappings can be made with reference to ESG data.

When the user selects an auxiliary data element in the displayed list, the control unit 180 sends a request script to the WAP server 20 (Figure 6A/B). The request script is preferably coded in XML, similarly to Tables 1 to 3. The request script contains a link to an auxiliary data page having the selected auxiliary data element, and type information (identifier) of the selected auxiliary data element. Then, the WAP server 20 parses the request script from the mobile terminal, and sends requested auxiliary data to the mobile terminal.

The control unit 180 downloads the auxiliary data from the WAP server 20 (S917), and stores the downloaded auxiliary data (S919). The control unit 180 displays a downloaded caption or plays back a downloaded audio during playback of the broadcast program (S907). A caption and audio can be simultaneously applied through steps S907 to S919. Synchronization between the caption or audio and the video of the broadcast program can be achieved in a manner described in connection with FIGS. 7A and 7B.

When a broadcast reception termination request is input from the user (S921), the control unit 180 terminates broadcast reception.

In the above description, one auxiliary data element is selected and downloaded. One or more auxiliary data elements may also be selected, downloaded, and displayed through user selection, as described in connection with FIGS. 7A and 7B.

In auxiliary data selection, the availability of auxiliary data is marked using icons, and the user can select a desired caption or audio by inputting one of numeric keys mapped to the icons. One or more auxiliary data elements may also be selected using a menu, similarly to the case of FIGS. 7A and 7B.

Also in the embodiment of FIGS. 7A and 7B, the availability of auxiliary data can be marked using icons, and the user can select a desired caption or audio by inputting one of numeric keys mapped to the icons.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

As apparent from the above description, the present invention provides a digital broadcast playback method for a mobile terminal, wherein link information on auxiliary data is delivered to the user during digital broadcast reception and the user can select one or more of captions and audios in various languages. Thereby, the user can enjoy a digital broadcast using a mobile terminal in a more friendly environment.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A digital broadcast playback method for a mobile terminal, comprising:
updating, upon transitioning to a broadcast reception mode, electronic service guide (ESG) data;
displaying a service channel list using the ESG data;
selecting a service channel in the service channel list;
downloading at least one auxiliary data element from an auxiliary data page associated with the selected service channel; and
playing back a broadcast program of the selected service channel together with at least one of the downloaded auxiliary data elements.

2. The digital broadcast playback method of claim 1, wherein downloading at least one auxiliary data element comprises:
connecting to and displaying the auxiliary data page;
selecting at least one of auxiliary data elements in the auxiliary data page; and
downloading the selected auxiliary data element.

3. The digital broadcast playback method of claim 1, wherein downloading at least one auxiliary data element comprises:
sending a request script for at least one auxiliary data element to the auxiliary data page; and
downloading the requested auxiliary data element in response to the request script.

4. The digital broadcast playback method of claim 3, wherein the request script comprises link information of the auxiliary data page and type information of auxiliary data elements.

5. The digital broadcast playback method of claim 1, wherein updating ESG data comprises:
checking whether the ESG data expired; and
receiving new ESG data and storing the new ESG data if the ESG data has expired.

6. The digital broadcast playback method of claim 5, wherein updating ESG data further comprises preventing updating of the ESG data if the ESG data is still valid.

7. The digital broadcast playback method of claim 1, wherein the ESG data comprises link information of an auxiliary data page having auxiliary data and type information of the auxiliary data.

8. The digital broadcast playback method of claim 7, wherein the auxiliary data comprises caption data and audio data as data elements.

9. The digital broadcast playback method of claim 1, wherein the service channel list comprises names of service channels, titles of broadcast programs, and identifiers of auxiliary data elements.

10. The digital broadcast playback method of claim 9, wherein displaying a service channel list comprises:
displaying auxiliary data elements as icons; and
mapping numeric keys of the mobile terminal to the icons so as to enable a user to select one of the auxiliary data elements by inputting one of the numeric keys.

11. The digital broadcast playback method of claim 1, wherein playing back a broadcast program of the selected service channel comprises playing back at least one of a caption file and audio file, as part of auxiliary data, in synchronization with the broadcast program in playback.

12. The digital broadcast playback method of claim 11, wherein the caption file is displayed in synchronization with preset display times.

13. The digital broadcast playback method of claim 11, wherein the audio file, is played back in synchronization with the broadcast program, instead of a default audio native to the broadcast program.

14. A digital broadcast playback method for a mobile terminal, comprising:
updating electronic service guide (ESG) data in response to a broadcast reception;
playing back a broadcast program of a selected service channel using the updated ESG data;
checking whether information regarding auxiliary data associated with the broadcast program is present in the ESG data;
displaying the information on auxiliary data, if information regarding auxiliary data is present in the ESG data;
downloading at least one auxiliary data element from an auxiliary data page associated with the selected service channel; and
playing back the broadcast program of the selected service channel together with at least one of the downloaded auxiliary data elements.

15. The digital broadcast playback method of claim 14, wherein downloading at least one auxiliary data element comprises:
connecting to and displaying the auxiliary data page;
selecting at least one of auxiliary data elements in the auxiliary data page; and
downloading the selected auxiliary data element.

16. The digital broadcast playback method of claim 14, wherein downloading at least one auxiliary data element comprises:
sending a request script for at least one auxiliary data element to the auxiliary data page; and
downloading the requested auxiliary data element, in response to the request script.

17. The digital broadcast playback method of claim 16, wherein the request script comprises link information of the auxiliary data page and type information of auxiliary data elements.

18. The digital broadcast playback method of claim 14, wherein updating ESG data comprises:
checking whether the ESG data expired; and
receiving new ESG data, if the ESG data has expired.

19. The digital broadcast playback method of claim 18, wherein updating ESG data further comprises preventing updating of the ESG data, if the ESG data is still valid.

20. The digital broadcast playback method of claim 14, wherein the ESG data comprises link information of an auxiliary data page having auxiliary data and type information of the auxiliary data.

21. The digital broadcast playback method of claim 20, wherein the auxiliary data comprises caption data and audio data as data elements.

22. The digital broadcast playback method of claim 14, wherein displaying the information on auxiliary data comprises:
displaying auxiliary data elements as icons; and
mapping numeric keys of the mobile terminal to the icons so as to enable a user to select one of the auxiliary data elements by inputting one of the numeric keys.

23. The digital broadcast playback method of claim 14, wherein playing back the broadcast program of the selected service channel comprises playing back at least one of a caption file and audio file, as part of the auxiliary data, in synchronization with the broadcast program in playback.

24. The digital broadcast playback method of claim 23, wherein the caption file is displayed in synchronization with preset display times.

25. The digital broadcast playback method of claim 23, wherein the audio file, instead of a default audio native to the broadcast program is played back in synchronization with the broadcast program.

26. A mobile terminal for digital broadcast playback, comprising:
a processor in communication with a memory, the memory including code which when accessed by the processor causes the processor to execute the steps of:
updating, upon transitioning to a broadcast reception mode, electronic service guide (ESG) data;
displaying a service channel list using the ESG data;
selecting a service channel in the service channel list;
downloading at least one auxiliary data element from an auxiliary data page associated with the selected service channel; and
playing back a broadcast program of the selected service channel together with at least one of the downloaded auxiliary data elements.

27. The terminal of claim 26, wherein downloading at least one auxiliary data element comprises:
connecting to and displaying the auxiliary data page;
selecting at least one of auxiliary data elements in the auxiliary data page; and
downloading the selected auxiliary data element.

28. The terminal of claim 26, wherein downloading at least one auxiliary data element comprises:
sending a request script for at least one auxiliary data element to the auxiliary data page; and
downloading the requested auxiliary data element in response to the request script.

29. The terminal of claim 28, wherein the request script comprises link information of the auxiliary data page and type information of auxiliary data elements.

30. The terminal of claim 26, wherein updating ESG data comprises:
checking whether the ESG data expired; and
receiving new ESG data and storing the new ESG data if the ESG data has expired.

31. The terminal of claim 30, wherein updating ESG data further comprises preventing updating of the ESG data if the ESG data is still valid.

32. The terminal of claim 26, wherein the ESG data comprises link information of an auxiliary data page having auxiliary data and type information of the auxiliary data.

33. The terminal of claim 32, wherein the auxiliary data comprises caption data and audio data as data elements.

34. The terminal of claim 26, wherein the service channel list comprises names of service channels, titles of broadcast programs, and identifiers of auxiliary data elements.

35. The terminal of claim 34, wherein displaying a service channel list comprises:
displaying auxiliary data elements as icons; and
mapping numeric keys of the mobile terminal to the icons so as to enable a user to select one of the auxiliary data elements by inputting one of the numeric keys.

36. The terminal of claim 26, wherein playing back a broadcast program of the selected service channel comprises playing back at least one of a caption file and audio file, as part of auxiliary data, in synchronization with the broadcast program in playback.

37. The terminal of claim 36, wherein the caption file is displayed in synchronization with preset display times.

38. The terminal of claim 36, wherein the audio file, is played back in synchronization with the broadcast program, instead of a default audio native to the broadcast program.
